# EUROPEAN PATENT APPLICATION

(11) **EP 2 511 135 A1**
(43) Date of publication of application: **17.10.2012**
(21) Application number: 11162243.7
(22) Date of filing: 13.04.2011
(51) Int. Cl.: B60Q 1/44, B60Q 1/52, B60Q 1/26, G02B 6/00

(54) **Window arrangement**

(71) Applicant: Volvo Car Corporation, 40 531 Göteborg (SE)
(72) Inventor: Larsson, Annika, 41714, Göteborg (SE)

(57) **Abstract**

The present disclosure relates to a window arrangement (10) comprising
- a window pane (12),
- an illumination means located at a first edge (16) of the window pane (12) such that the window pane (12) is adapted to act as a light guide for light emitted by the illumination means (14), wherein the illumination means (14) comprises means for generating a plurality of colours of the light emitted by the illumination means, and the illumination means (14) further comprises means for selecting one of the plurality of colours.

The disclosure further relates to a vehicle (22) comprising such a window arrangement (10) and a use of the window arrangement (10) for enhancing visibility through a window pane (12).

## Description

### TECHNICAL FIELD

The present disclosure relates to a window arrangement according to the preamble of claim 1. The window arrangement may be used in a vehicle. The disclosure further relates to a vehicle comprising such a window arrangement and a use of the window arrangement for enhancing visibility through a window pane.

### BACKGROUND

When looking through a window pane the perceived visual impression is influenced by the window pane through which the light rays pass in order to reach the eyes of the viewer. In addition, the window pane itself may be used for information purposes.

Document DE 20 2008 004 715 U1 discloses an arrangement for illuminating the edge of a vehicle side window, wherein the illumination means is fixedly attached to the lower edge of the side window pane and emits light into the window pane. According to the document, the window pane is easy to locate even in darkness. It is in particular possible to detect the upper edge of a frameless window, e.g. in a cabriolet. It also reduces the risk of leaving the vehicle with open windows, when it is dark outside. These uses have in common that the illumination of the window pane is used for making the window pane itself visible.

In a nautical environment it is known to use red and green discs in order to determine the colour of a navigation mark. By looking through the discs one at the time, it may be distinguished if the colour is red or green at a longer distance as compared to if only using the naked eye.

### SUMMARY

The object of the present disclosure is to overcome or ameliorate at least one of the disadvantages of the prior art, or to provide a useful alternative.

It is desirable to provide a window arrangement which may help to increase the visibility through the window pane. This function may desirably be combined with the above-mentioned known function of making the window pane visible.

It is further desirable to provide a window arrangement, which may be used for information purposes, for example to inform other road users of an emergency situation of a vehicle.

The object above may be achieved by the subject-matter of claim 1.

Thus, in a first aspect of the present invention there is provided a window arrangement comprising
- a window pane,
- an illumination means located at a first edge of the window pane such that the window pane is adapted to act as a light guide for light emitted by the illumination means.

The illumination means comprises means for generating a plurality of colours of the light emitted by the illumination means. The illumination means further comprises means for selecting one of the plurality of colours.

The window arrangement according to the invention is useful in a vehicle such as a car, bus, lorry, tram or train. It may also be used in a vessel or a building.

The illumination means may be fixedly attached to the window pane or it may be attached to a frame surrounding the window pane. The latter is appropriate if the window pane is openable, for example by lowering the window pane, since the illumination means in that case may remain in the frame which facilitates wiring for the supplying the illumination means with energy. The illumination means may be supplied from the electrical system of the vehicle. As an alternative the illumination means may have its own source of energy.

The colour may be selected in order to improve the visibility through the window. In certain weather conditions, for example in fog, the visibility may be improved by using a yellowish colour for at least the windscreen. It has though been known for drivers of a vehicle to use yellowish spectacles. However, the visibility is improved if instead the whole window pane is coloured, since if using spectacles the whole field of view is not covered, i.e. the person may look outside the spectacles when adjacent to the ends of his/her field of view. By having the colour incorporated into the window arrangement, there is no need for using an extra pair of spectacles, which may easily be lost and may be difficult to find when most needed.

In addition, the illumination means may be used for sending information to other road users. In an emergency situation, for example at least the rear window may be illuminated by a warning colour such as red or orange. The illumination may in such a case be flashing.

The plurality of colours comprises at least two colours, but in a preferred embodiment the number of possible colours is much higher, for example at least 10, at least 25 or at least 100.

With the window arrangement according to the invention it is possible to change the colour of the emitted light, thereby being able to select the colour in a way adapted to the prevailing situation. The window arrangement according to the invention further makes it possible to combine the features of selecting a colour for improved visibility with that for information purposes.

The selection of the colour may be made by a human operator, such as a driver or a passenger of a vehicle. The selection of the colour may instead or also be based on a sensor input, said sensor measuring a condition in the environment of the window pane, for example a rain sensor or a fog sensor. If the window arrangement is used in a vehicle, the selection of the colour may be coupled to an emergency system and/or safety system of the vehicle, for example illuminating the windows with red or orange colour when the vehicle is braking hard. In this case, safety system may relate to an active safety system such as a collision warning system, etc. Furthermore, a means or arrangement for selecting one of said plurality of colours may be constituted of a warning system, an emergency system and/or an active safety system such as a collision warning system.

The window arrangement according to the invention is suitable for any window in the vehicle, in particular for the windscreen. One, two or more of the windows may be provided with a window arrangement. In an embodiment all windows may be provided with such window arrangements. The whole of the window pane, or portions of it, may be illuminated.

The illumination means of the window arrangement according to the invention may comprise a light strip located along at least a portion of the first edge of the window pane. Preferably the light strip extends along essentially the entire length of the first edge. Thereby the window pane is provided with a light, which is distributed lengthwise, preferably distributed in an even way.

In an embodiment the illumination means comprises light emitting diodes of at least two different colours, the means for generating a plurality of colours being provided by mixing light from the light emitting diodes. The intensity for the at least two different colours may be chosen independently of each other. By combining light from the light from the light emitting diodes of at least two different colours at various levels for each of them the plurality of different colours is provided. As an example: if the first colour may be chosen in n different intensity levels and the second in m different levels, n times m different combinations are selectable.

The light emitting diodes may comprise red, green and blue light emitting diodes. By varying the intensity of red, green and blue light and adding these colours to each other a wide spectrum of different colours is provided.

As an alternative, it may be possible to use only one kind of light source, for which it is possible to set a preferred frequency of the emitted light, i.e. to select a colour, for example a sweepable light source.

In an embodiment, the first edge is an upper edge of the window pane, when mounted in a vehicle. This means that the illumination means are arranged along the upper edge, thereby being protected from water droplets falling onto the window pane, since these will follow gravity downwards. It would also be possible to arrange the illuminations means along any other edge of the window pane, or along two or more edges.

In an embodiment essentially the whole of the window pane is illuminable by the light. This gives a unitary impression of the selected colour.

In an embodiment, the light intensity gradually fades away with the distance from the illumination means, such that the light intensity at a second edge of the window pane, the second edge being opposite to the first edge, is between 1% and 80% of the light intensity at the first edge, preferably between 5% and 75% and most preferably between 10% and 40%. This may be advantageous when there is bright sunshine outside the vehicle or in order to avoid dazzling the driver of the vehicle.

The selected one of the plurality of colours may be adapted to enhance the contrast when looking through the window pane, for example by using a yellowish colour, which improves visibility in fog.

The selected one of the plurality of colours may be adapted to inform other road users, for example of a state of emergency. In that case an orange or a red colour may be used.

The selected one of the plurality of colours may be adapted to reduce dazzling. When driving in darkness, the headlight of approaching vehicles may dazzle the driver such that his/her sight is temporarily deteriorated. The colour of the windscreen may be used to reduce this problem. A sensor, such as a camera, radar, lidar or lux meter, may be used for detecting approaching vehicles. In this case, it may be suitable to only illuminate a portion of the window pane.

The selected one of the plurality of colours may be adapted to compensate for the colour of an external lighting. It is common to use sodium vapour lights or mercury vapour light as street lighting since these are energy efficient. However, their emitted spectrum differs from that of daylight. Therefore human beings do not perceive colours in the same way as in daylight. However, with a window arrangement according to the invention the colour of the window pane may be selected to compensate for this.

In a second aspect of the present invention there is provided a vehicle comprising at least one window arrangement as described above. The window arrangement according to the invention is suitable for any window in the vehicle, in particular for the windscreen. One, two or more of the windows may be provided with a window arrangement. In an embodiment all windows may be provided with such window arrangements.

In an embodiment, the vehicle further comprises an environmental sensor, such as a rain sensor or a fog sensor and the colour of the light may be selectable based on input from the environmental sensor.

In a third aspect of the present invention there is provided a use of a window arrangement as described above for enhancing an impression perceived through the window pane.

Further, the illumination means may be used for information purposes by means of selecting one colour of the plurality of colours, the colour for information purposes being different from that of enhancing the impression perceived through the window pane.

### BRIEF DESCRIPTION OF THE DRAWINGS

The present invention will hereinafter be further explained by means of non-limiting examples with reference to the appended drawings wherein:
- Fig. 1: shows a first embodiment of a window arrangement according to the invention;
- Fig. 2: shows a second embodiment of a window arrangement according to the invention; and
- Fig. 3: is a schematic drawing of a vehicle according to the invention.

It should be noted that the appended drawings are not necessarily drawn to scale and that the dimensions of some features of the present invention may have been exaggerated for the sake of clarity.

### DETAILED DESCRIPTION

The invention will, in the following, be exemplified by embodiments. It should however be realized that the embodiments are included in order to explain principles of the invention and not to limit the scope of the invention, defined by the appended claims. Details from two or more of the embodiments may be combined with each other.

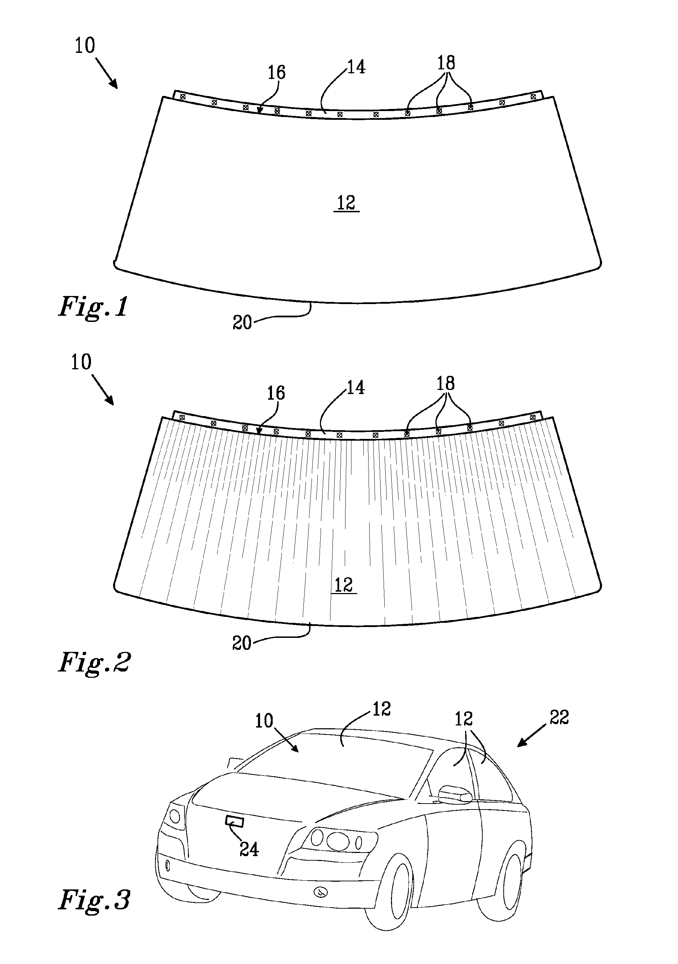

Figure 1 schematically illustrates a first embodiment of a window arrangement 10 according to the invention, here exemplified by a windscreen of a vehicle. The window arrangement 10 comprises a window pane 12 and an illumination means, in the form of a light strip 14 extending essentially along the entire length of the first edge 16 of the window pane 12. The illumination means 14 comprises a plurality of light emitting diodes 18. The light emitting diodes 18 are red, blue and green, such that a wide spectrum of colours can be emitted by varying the intensity of the respective colours. Since the light emitting diodes are located along the edge of the window pane 12, the window pane 12 will act as a light guide for the emitted light.

A driver and/or a passenger may select a preferred colour. The selection may be done on a screen on the dashboard, the screen being a part of the infotainment system of the vehicle. The colour may instead or also be selected based on sensor input.

Figure 2 schematically illustrates a second embodiment of a window arrangement 10 according to the invention when illuminated. The illumination means 14 is arranged in a way similar to that of Figure 1. However, in the second embodiment, the intensity of the light is chosen such that the light intensity gradually fades away with the distance from the illumination means 14. Therefore the upper part of the window pane 12 will have more colour than the lower part. The light intensity at a second edge 20 of the window pane 12, the second edge 20 being opposite to the first edge 16, may be between 1% and 80% of the light intensity at the first edge 16, preferably between 5% and 75% and most preferably between 10% and 40%. The fading effect may also be selected by an operator, such as the driver of the vehicle.

Figure 3 is a schematic drawing of a vehicle 22 according to the invention. One, two or more of the windows may be provided with the window arrangement 10 described above. The window arrangement according to the invention is suitable for any window in the vehicle 22, in particular for the windscreen. In an embodiment all windows may be provided with such window arrangements.

The vehicle 22 further comprises an environmental sensor 24, such as a rain sensor or a fog sensor, and the colour of the light may be selectable based on input from the environmental sensor.

Further modifications of the invention within the scope of the appended claims are feasible. As such, the present invention should not be considered as limited by the embodiments and figures described herein. Rather, the full scope of the invention should be determined by the appended claims, with reference to the description and drawings.

## Claims

1. A window arrangement (10) comprising
- a window pane (12),
- an illumination means (14) located at a first edge (16) of said window pane (12) such that said window pane (12) is adapted to act as a light guide for light emitted by said illumination means (14),
**characterized in that**
said illumination means (14) comprises means for generating a plurality of colours of said light emitted by said illumination means, and said illumination means further comprises means for selecting one of said plurality of colours.

2. The window arrangement (10) according to claim 1, wherein said illumination means comprises a light strip (14) located along at least a portion of said first edge (16) of said window pane (12).

3. The window arrangement (10) according to claim 1 or 2, wherein said illumination means comprises light emitting diodes (18) of at least two different colours, said means for generating a plurality of colours being provided by mixing light from said light emitting diodes (18).

4. The window arrangement (10) according to claim 3, wherein said light emitting diodes (18) comprise red, green and blue light emitting diodes.

5. The window arrangement (10) according to any one of the preceding claims,
wherein said first edge (16) is an upper edge of said window pane (12), when mounted in a vehicle (22).

6. The window arrangement (10) according to any one of the preceding claims,
wherein essentially the whole of said window pane (12) is illuminable by said light.

7. The window arrangement (10) according to any one of the preceding claims,
wherein the light intensity gradually fades away with the distance from said illumination means, such that the light intensity at a second edge (20) of said window pane (12), said second edge (20) being opposite to said first edge (16), is between 1% and 80% of the light intensity at said first edge (16), preferably between 5% and 75% and most preferably between 10% and 40%.

8. The window arrangement (10) according to any one of the preceding claims,
wherein the selected one of said plurality of colours is adapted to enhance the contrast when looking through said window pane (12).

9. The window arrangement (10) according to any one of the preceding claims,
wherein the selected one of said plurality of colours is adapted to inform other road users, for example of a state of emergency.

10. The window arrangement (10) according to claim 1, wherein said means for selecting one of said plurality of colours is constituted of a warning system, an emergency system and/or an active safety system such as a collision warning system.

11. The window arrangement (10) according to any one of the preceding claims, wherein the selected one of said plurality of colours is adapted to reduce dazzling.

12. The window arrangement (10) according to any one of the preceding claims, wherein the selected one of said plurality of colours is adapted to compensate for the colour of an external lighting.

13. A vehicle (22) comprising at least one window arrangement (10) according to any one of the preceding claims.

14. The vehicle (22) according to claim 12, wherein said vehicle (22) further comprises an environmental sensor (24), such as a rain sensor or a fog sensor, and the colour of said light is selectable based on input from said environmental sensor (24).

15. A use of a window arrangement (10) according to any one of claims 1-11 for enhancing an impression perceived through said window pane (12).

16. The use according to claim 14, wherein said illumination means further is used for information purposes by means of selecting one colour of said plurality of colours, said colour for information purposes being different from that of enhancing said impression perceived through said window pane (12).
